# EUROPÄISCHE PATENTANMELDUNG

(11) **EP 0 878 294 A2**
(43) Veröffentlichungstag der Anmeldung: **18.11.1998**
(21) Anmeldenummer: 98106386.0
(22) Anmeldetag: 08.04.1998
(51) Int. Cl.: B30B 11/24

(54) **Schneckkenelemente für Schneckenpresse**

(30) Priorität: 15.04.1997 DE 29706744 U
(71) Anmelder: Hasenbein, Günter, Dipl.-Ing., 22946 Grossensee (DE)
(72) Erfinder: Hasenbein, Günter, Dipl.-Ing., 22946 Grossensee (DE)
(74) Vertreter: DIEHL GLAESER HILTL & PARTNER

(57) **Zusammenfassung**

Die Erfindung bezieht sich auf Schneckenenelemente für eine aus mehreren Elementen zusammengesetzte Schneckenpresse, insbesondere für die Fleischmehlerzeugung. Das Element weist an seinem Außenumfang eine Verschleißmaterialschicht und im Inneren einen Durchgang für die Schneckenwelle (10) auf. Das Schneckenelement ruht auf Stützringen (110) und ist über diese mit der Schneckenwelle antriebsmässig verbunden.

## Beschreibung

Die Erfindung bezieht sich auf ein Schneckenelement einer Schneckenpresse, insbesondere für die Fleischmehlerzeugung, das an seinem Außenumfang eine Verschleißmaterialschicht und in seinem Inneren einen Durchgang zum Aufsetzen des Schneckenelements auf die Schneckenwelle aufweist, wobei mehrere derartige Elemente zu einer Schnecke zusammengesetzt werden.

Die für die Funktion wesentlichen Teile von Schneckenpressen unterliegen naturgemäß - gerade bei der Fleischmehlerzeugung - einem außerordentlich starken Verschleiß. Herkömmlicherweise werden daher vielfach verschleißfeste Materialien auf die dem Verschleiß besonders ausgesetzten Flächen der Schnecke aufgeschweißt und anschliessend mechanisch nachbearbeitet. Dieses konventionelle Herstellungsverfahren ist besonders zeit- und kostenintensiv.

Nach einer relativ kurzen Einsatzzeit müssen die Verschleißteile jedoch ausgewechselt und können nachgebessert wiederverwendet werden. Sofern diese Teile aber nicht mehr repariert werden können, müssen sie verschrottet und entsorgt werden. Somit geht das Grundmaterial als auch das verbliebene aufgetragene Verschleißmaterial der Schneckenelemente nutzlos verloren.

Das Lösen der Schneckenteile nach dem Einsatz im Betrieb erfolgt unter widrigen Umständen an der warmen Maschine, wobei die Teile überhaupt nur unter großen Kraftanstrengungen von der Welle gelöst werden können.

Um das Auswechseln der Verschleißteile zu erleichtern und den Verlust an nicht wiederverwertbarem Material zu reduzieren, wird gemaß der Erfindung einerseits eine leicht lösbare Stütz- und Spannvorrichtung für die Schneckenelemente vorgeschlagen. Andererseits können gemäss der Erfindung benutzte Schneckenelemente dadurch wiederhergestellt werden, dass deren Verschleißmaterialschicht durch Aufsprühen von Material, Keramikbeschichtung und Laserstrahlbeschichtung erneuert wird. Ein Schneckenelement nach der Erfindung besteht in einer bevorzugten Form aus zwei in den Durchgang eingesetzten Spannbuchsen, deren zylindrische Bohrung auf der Schneckenwelle antriebsmässig aufsitzt. Der äußere konisch ausgeformte Außenkörper der Spannbuchse trägt das innen in gleicher Weise geformte Schneckenelement mit dem Verschleißkörper. Die Spannbuchsen werden gegeneinander mit der Verschleiß-teilhülse durch Schrauben verspannt, wobei die Spannbuchse auch mit Andrückbohrungen zum einfachen Lösen der Buchsen versehen werden kann.

Zur Unterstützung der Drehmomentübertragung können wahlweise Passfedern bzw. Keile oder ähnliche Elemente eingesetzt werden.

Bei einem anderen Schneckenelement gemäss der Erfindung ist der innere Durchgang zylinderförmig ausgebildet und wird auf mindestens einen Stützring aufgesetzt. Die Stützringe sind drehmomentmässig mit der Schneckenwelle genauso verbunden wie mit den Schneckenelementen selbst. Der Vorteil dieser Ausführungsform ist darin zu sehen, dass die Schneckenelemente selbst einen sehr einfachen Aufbau haben und dass sie zudem auch mit sehr einfach ausgebildeten ringartigen Stützelementen zusammenwirken. Derartige Teile können in Betrieben mit einfachen Mitteln hergestellt werden.

Bei dieser zweiten Ausführungsform kann die Drehmomentübertragung über Drehsicherungsstifte, aber auch ebenso gut über andere Nut-Feder-Verbindungen hergestellt werden.

Die Schneckenelemente gemäss der Erfindung sind allgemein im Lebensmittelsektor einsetzbar, also nicht nur bei der Fleischmehlerzeugung, sondern insbesondere auch, wenn es sich um rein pflanzliche Ausgangsmaterialien handelt.

Der Vorteil liegt somit in der Zeitersparnis beim Auswechseln der einzelnen Teile einer Schnecke und in den niedrigeren Anschaffungskosten.

Die Erfindung wird nachstehend anhand von bevorzugten Ausführungsformen beispielsweise beschrieben.
- Fig. 1: zeigt eine Querschnittsansicht einer ersten Ausführungsform eines Schneckenelements gemäß der Erfindung.
- Fig. 2: zeigt eine zweie Ausführungsform eines Schneckenelements gemäß der Erfindung.
- Die Fig. 3 und 4: beziehen sich auf das Lösen der Buchsen der in Fig. 2 gezeigten Ausführungsform.
- Fig. 5: zeigt eine weitere Ausführungsform eines Schneckenelementes gemäss der Erfindung in Querschnittsansicht.

In den Figuren ist mit 10 eine Schneckenwelle bezeichnet, welche beispielsweise in der Fleischmehlerzeugung eingesetzt wird. Auf dieser drehbar gelagerten und angetriebenen Schneckenwelle können mehrere im wesentlichen ringförmige Schneckenelemente 100 gemäß der Erfindung aufgesetzt und an bestimmter Stelle befestigt werden. Die einzelnen Schneckenelemente 100 sind an ihrem Außenumfang mit einer Verschleißmaterialschicht 12 ausgestattet. Im Inneren des Schneckenelements 100 befindet sich ein Durchgang 130, der so dimensioniert ist, daß in ihm Spannbuchsen oder dgl. untergebracht werden können, so daß das Schneckenelement 110 auf der Schneckenwelle 10 an bestimmter Stelle befestigt und ein Drehmoment übertragen werden kann.

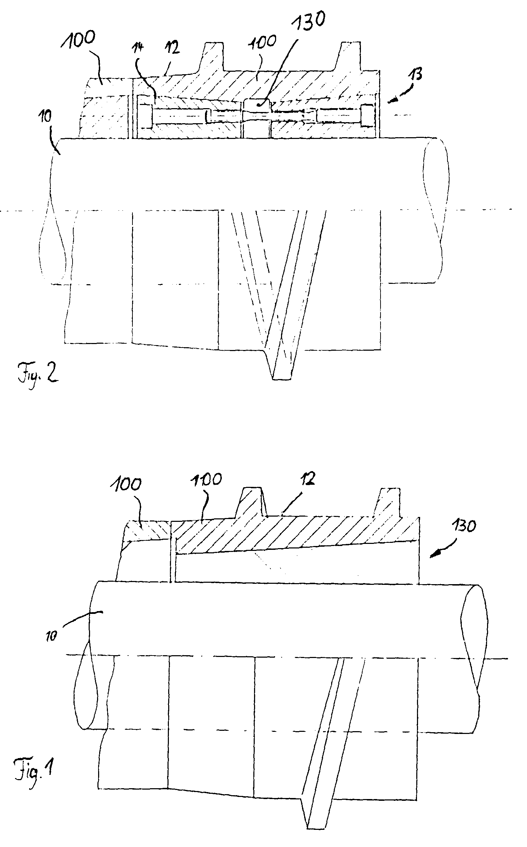

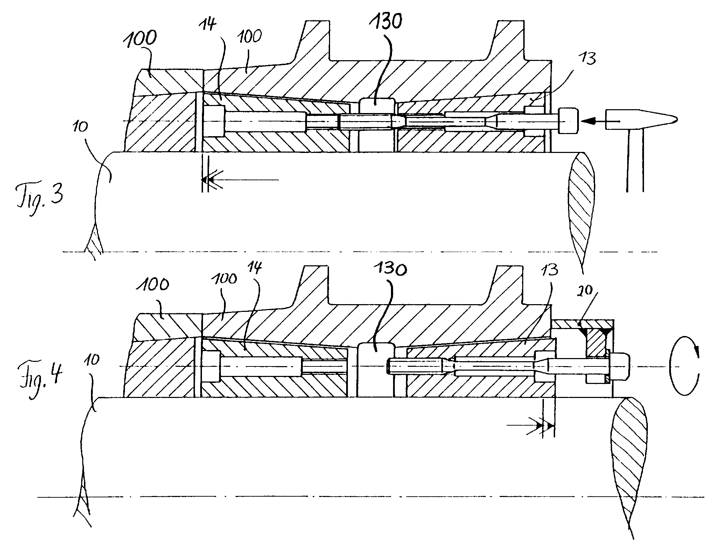

Fig. 2 zeigt eine insofern abgewandelte Ausführungsform, als im Inneren des Schneckenelementes 100 zwei gegenläufige konusförmige Teile 13 und 14 vorgesehen sind, in welchen Spannteile über Spannschrauben befestigt sind. Es ist ersichtlich, daß durch Anziehen der Spannschrauben die beiden Spannbuchsen 13 und 14 aufeinander zu gefahren werden können und auf diese Art und Weise ein fester Sitz für das Schneckenelement 100 auf der Schneckenwell erzeugt wird.

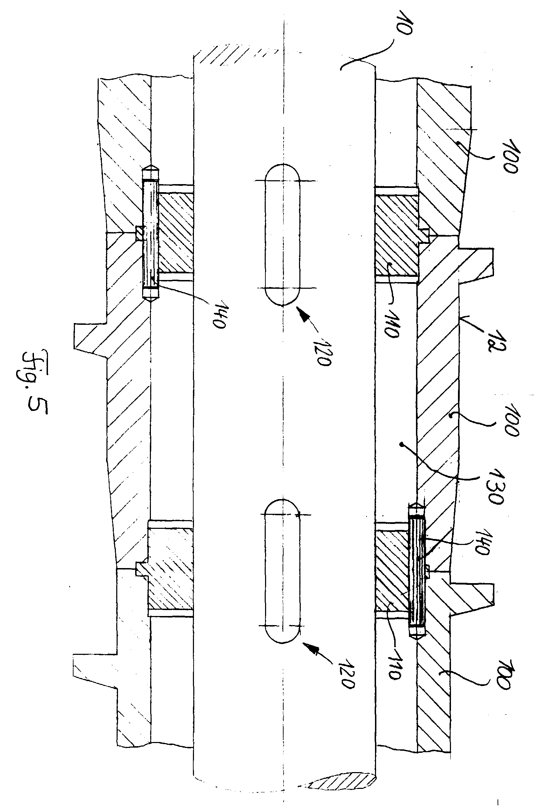

In Fig. 3 ist das Lösen der Innenbuchse 14 gezeigt, was durch einfaches Schlagen auf die Spannschrauben bewerkstelligt wird.

Fig. 4 zeigt das Lösen der Außenbuchse 13 mit Hilfe einer rechts angesetzten Demontagehilfe 20.

Bei der Ausführungsform eines Schneckenelementen 100 gemäss der Erfindung nach Fig. 5 ist die Besonderheit darin zu sehen, dass das Schneckenelement 100 mit einem zylindrischen Durchgang 130 ausgebildet ist. Es liegt auf der Hand, dass die Herstellung eines solchen Durchganges unproblematisch ist.

Die Welle 10 ist in bestimmten Abständen, die im wesentlichen der Länge der einzelnen Schneckenelemente 100 entsprechen, mit einer Nut für die Aufnahme einer Feder versehen, die wiederum mit einem Stützring 110 zusammenwirkt, der auf die Welle 10 aufgeschoben werden kann und über die so gebildete Nut-Feder-Verbindung 120 antriebsmässig mit der Welle verbunden werden kann.

Der Stützring 110 ist an seiner Außenabmessung so ausgebildet, dass er mit dem Durchgang 130 des Schneckenelementes 100 einen entsprechenden Sitz bildet. Nicht wesentlich ist, dass nach Fig. 5 die beiden Enden benachbarter Schneckenelemente 100 mit einer Eindrehung versehen sind, die Durchmesser haben, die leicht grösser als der Durchmesser 130 der Schneckenelemente 100 ist. Diese Eindrehung steht durch Nacharbeitung des Durchgangs 130, der im übrigen über seine gesamte Länge nicht bearbeitet werden muss und daher keine besondere Präzision erfordert. Mit 140 ist eine Verdrehsicherung bezeichnet, es handelt sich hierbei um einen zylindrischen Stift, der in eine Bohrung eingesetzt wird, die an der Grenzfläche zwischen Innenwandung des Durchgangs 130 und Außenoberfläche des Stützrings 110 gebildet worden ist.

Zunächst wird der Zusammenbau der Schneckenelemente und sodann die Auseinandernahme geschildert. Anfänglich bei Betrachtung der Fig. 5 von rechts her wird das links gezeigte Schneckenelement 100 über die Welle 10 geschoben. Sodann wird der linke Stützring 110 auf die Welle aufgebracht, wobei die Nut-Feder-Verbindung 120 dafür sorgt, dass der Stützring 110 fest auf der Welle 10 sitzt. Der Aussenumfang des Stützrings 110 ist in die Bohrung 130 des linken Schneckenelements 100 eingeführt worden, so dass dieses seinen endgültigen Sitz eingenommen hat. Nunmehr wird in die Bohrung ein Verdrehsicherungsstift 140 von rechts her eingeführt und daran anschliessend wird das mittlere Schneckenelement 100 so über die Welle geschoben, dass die Bohrung für die Verdrehsicherung zu dem bereits eingeführten Verdrehsicherungsstift 140 passt. Die weiteren Arbeitsvorgänge sind Wiederholungen der bereits vorbeschriebenen Montageschritte.

Bei der Auseinandernahme wird zunächst das rechts gezeigte Schneckenelemente 100 nach rechts von der Welle 10 entfernt. Sodann kann der rechts gezeigte Drehsicherungsstift 140 ebenfalls nach rechts aus der Bohrung herausgezogen werden. Sodann der rechts gezeigte Stützring 110 entfernt werden. Darauffolgend kann das Schneckenelemente 100 von der Welle 10, wie bereits zuvor beschrieben, entfernt werden.

Es ist ersichtlich, dass sowohl der Zusammenbau als auch das Auseinandernehmen auf einfachste Art und Weise durchgeführt werden kann. Dies führt zu relativ kurzen Stillstandszeiten der gesamten Schneckenpresseinrichtung.

## Patentansprüche

1. Schneckenenelement für eine aus mehreren Elementen zusammengesetzte Schneckenpresse, insbesondere für die Fleischmehlerzeugung, an seinem Außenumfang aufweisend eine Verschleißmaterialschicht und im Inneren einen Durchgang für die Schneckenwelle, dadurch gekennzeichnet, daß der Durchgang (130) des Schneckenelementes (100) einfach- oder doppelkonisch ausgebildet ist und im Durchgang Spannbuchsen (13, 14) mit passenden Außenkonusteilen vorgesehen sind, deren Innendurchmesser zur Schneckenwelle (10) zwecks Drehmomentübertragung von der Schneckenwelle auf das Schneckenelement passt.

2. Schneckenelement für eine aus mehreren Elementen zusammengesetzte Schneckenpresse, insbesondere für die Fleischmehlerzeugung, an seinem Außenumfang aufweisend eine Verschleißmaterialschicht und im Inneren einen Durchgang für die Schneckenwelle, dadurch gekennzeichnet, dass der Durchgang (130) zylindrisch ausgebildet und so bemessen ist, dass im Durchgang ringförmige Stützringe (110) einsetzbar sind, die mit der Schneckenwelle (10) über eine Nut-Feder-Anordnung (120) antriebsmässig verbunden sind und an ihrem Aussenumfang über mindestens eine Verdrehsicherung (110) mit dem Scheckenelement (100) antriebsmässig verbunden sind.

3. Schneckenelement nach Anspruch 2, daduch gekennzeichnet, dass die Verdrehsicherung (140) als zylindrischer Stift ausgebildet ist, der in eine Bohrung einsetzbar ist, die an der Grenzfläche zwischen Außenoberfläche des Stützringes (110) und Innenfläche des Durchgangs (130) des Schneckenelements (100) ausgebildet ist.
